Europäisches Patentamt

European Patent Office

Office européen des brevets

(19)

(11) Veröffentlichungsnummer: **0 239 778**
**B1**

(12) **EUROPÄISCHE PATENTSCHRIFT**

(45) Veröffentlichungstag der Patentschrift:
27.12.89

(21) Anmeldenummer: 87102502.9

(22) Anmeldetag: 23.02.87

(51) Int. Cl.⁴: **B01D 53/36,** B01J 37/00,
B01J 23/22, B01J 23/84,
B01J 23/24, B01J 27/198

(54) Katalysatormaterial zur Minderung der Stickoxide in Rauchgasen.

(30) Priorität: 06.03.86 DE 3607436

(43) Veröffentlichungstag der Anmeldung:
07.10.87 Patentblatt 87/41

(45) Bekanntmachung des Hinweises auf die Patenterteilung:
27.12.89 Patentblatt 89/52

(84) Benannte Vertragsstaaten:
AT BE CH DE ES GB IT LI NL SE

(56) Entgegenhaltungen:
DE-A- 2 617 744
FR-A- 2 254 367
FR-A- 2 366 058

Comprehensive Inorganic Chemistry, Bd. 3 (1975),
pages 375-376

Die Akte enthält technische Angaben, die nach dem
Eingang der Anmeldung eingereicht wurden und die
nicht in dieser Patentschrift enthalten sind.

(73) Patentinhaber: Siemens Aktiengesellschaft,
Wittelsbacherplatz 2, D-8000 München 2(DE)

(72) Erfinder: Hums, Erich, Dr., Aschaffenburger Strasse 16,
D-8520 Erlangen(DE)
Erfinder: Schmelz, Helmut, Dr., Rudolf-Sieck-Strasse 14,
D-8210 Prien(DE)
Erfinder: Hein, Dietmar, Prof. Dr., Emdener Strasse 19,
D-8500 Nürnberg(DE)

## Beschreibung

Die Erfindung bezieht sich auf ein Katalysatormaterial zur Minderung der Stickoxide in Rauchgasen in Gegenwart von Ammoniak.

Es ist bereits durch die DE-B 2 458 888 ein Katalysatormaterial bekannt, mit dessen Hilfe Stickoxide in Abgasen in Gegenwart von Ammoniak katalytisch zu molekularem Stickstoff reduziert werden können. Als katalytisch wirksame Kombination wird Titanoxid und Vanadiumoxid neben einer Reihe anderer Zusätze wie zum Beispiel Molybdän, Wolfram, Nickel, Cobalt verwendet. Diese in der Kombination katalytisch wirksamen Substanzen werden als Hydroxide oder wasserlösliche Salze ausschließlich in einer gemeinsamen Fällung (Kopräzipitation) mit Titansäure erhalten. Sie werden anschließend getrocknet und calciniert. Mit diesem Katalysatormaterial lassen sich die Stickoxide in Rauchgasen in Gegenwart von Ammoniak reduzieren. Die volle Wirksamkeit dieses Katalysatormaterial wird jedoch erst bei verhältnismäßig hohen Rauchgastemperaturen erreicht.

Es ist bereits ein weiteres Katalysatormaterial zur Verminderung der Stickoxide in Rauchgasen vorgeschlagen worden (DE-A 3 531 810, veröffentlich am 19.3.87), bei dem das calcinierte Titanoxid in der Anastasform eingesetzt wird und nur oberflächlich mit Vanadiumoxid und Wolframoxid belegt ist. Mit diesem Katalysatormaterial kann die katalytische Aktivität zu niedrigeren Rauchgastemperaturen hin verschoben werden. Es hat sich gezeigt, daß die Standzeit der Anastasmodifikation des Titanoxids nicht nur temperaturabhängig ist, sondern darüberhinaus von verschiedenen Faktoren der Vorbehandlung abhängt.

Der Erfindung liegt daher die Aufgabe zugrunde, ein Katalysatormaterial zur Minderung der Stickoxide in Rauchgasen zu entwickeln, das ausreichend effektiv ist, den Temperaturbereich optimaler katalytischer Aktivität zu niederen Temperaturen hin verbreitert, die Standzeit des Katalysatormaterials erhöht und mit geringstmöglichen Mengen an Zuschlagsstoffen, insbesondere an Oxiden auskommt.

Diese Aufgabe wird durch die Merkmale des Anspruchs 1 gelöst. Weitere vorteilhafte Weiterbildungen sind in den Ansprüchen 2 bis 5 zu entnehmen.

Durch die Verwendung von handelsüblichem hydrothermalen Titandioxid wird eine Phasenumwandlung wie beispielsweise die Rutilisierung im Kristallinneren unterdrückt. Hydrothermales Material ist nahezu fremdionenfrei und damit auch fehlgitterstellenarm. Durch die Mahlaktivierung werden die für die katalytische Aktivität benötigten Gitterfehlstellen nur an der Oberfläche der Kristalle erzeugt.

In besonders vorteilhafter Weise kann das hydrothermale Material mit den vorgesehenen Oxiden in einer Suspension mit deionisiertem Wasser oder organischen, ionenbildenden Lösungsmitteln wie z.B. Alkohole oder Essigsäure vermahlen werden. Die hierbei erhaltene erhöhte Reaktivität der gemahlenen Feststoffe beruht weniger auf den Oberflächenzuwachs. Sie führt vielmehr nach Art, Intensität und Dauer des Energieeintrages beim Vermahlen zu Gitterfehlstellen, Phasen- und Modifikationsänderungen. Diese Effekte sind jedoch nur oberflächlich. Sie bilden keine Phasenumwandlungen im Inneren des Titandioxidkristallgitters mit den bereits genannten negativen Folgen.

Weitere Einzelheiten der Erfindung werden anhand der Figuren in der nachfolgenden Beschreibung erläutert.

Fig. 1 die Atomprozente zweier aus Wolfram-, Vanadiumoxid oder Titanoxid bestehenden Katalysatoren und

Fig. 2 eine Gegenüberstellung der Konversionsraten dieser beiden Katalysatoren in Abhängigkeit von der Reaktionstemperatur.

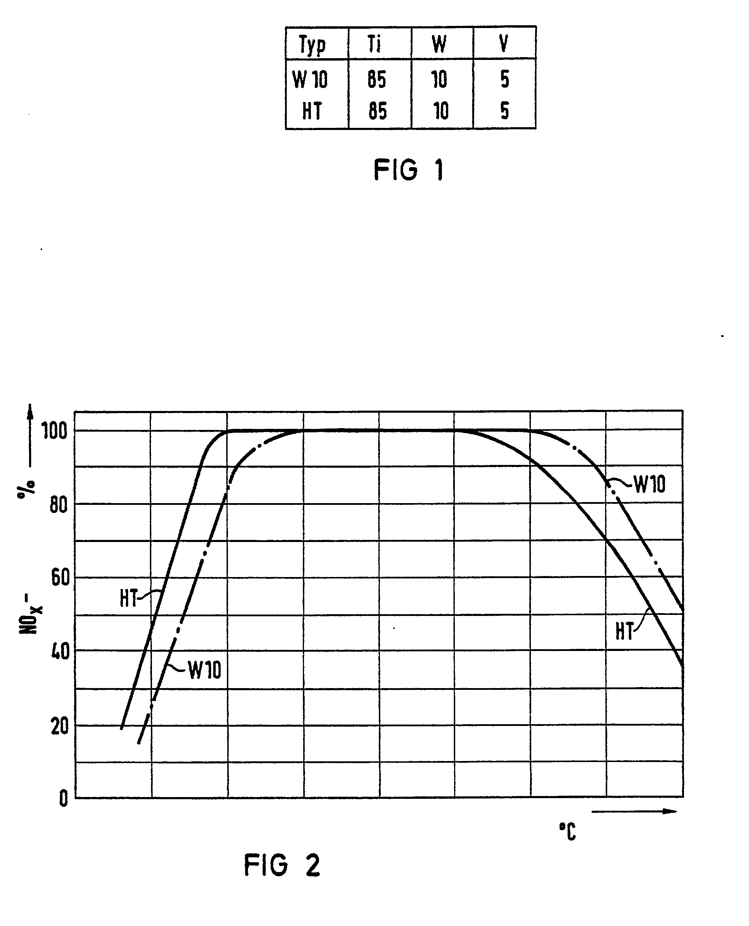

Das Titandioxid ($TiO_2$) wird gemäß den in den Figuren gezeigten Ausführungsbeispielen für die Katalysatormaterialien "W10" (unter Verwendung von calciniertem Titanoxid als Ausgangsmaterial) und "HT" (unter Verwendung von handelsüblichem hydrothermalem Titanoxid als Ausgangsmaterial) mit Vanadiumoxyd (z.B. $V_2O_5$) und Wolframoxid ($WO_3$) in einer Suspension mit deionisiertem Wasser vermahlen. Dabei ist es auch möglich, abweichend vom Ausführungsbeispiel zusätzlich zum Vanadiumoxid eines oder mehrere Oxide der Elemente Phosphor, Schwefel, Chrom, Zirkon, Magnesium, Kupfer, Cobalt, Eisen und Uran zu verwenden. Der Energieeintrag bei der Vermahlung kann im einfachsten Fall mittels geeigneter Dissolver-Laufwerke erreicht werden, sofern keine speziellen Mühlen (z.B. Attritormühlen) verwendet werden sollen. Das Mahlgut wird zunächst getrocknet und anschließend calciniert. Die Belegung der Titandioxidoberfläche mit den jeweiligen mitvermahlenen Oxiden kann auch schrittweise durch wiederholtes Mahlen und erneutes Calcinieren erfolgen. Nach dem letzten Calcinieren wird das Katalysatormaterial noch einmal abschließend gemahlen. Das so erhaltene gebrauchsfertige Katalysatormaterial zeigt die in der Fig. 1 in Atomprozenten angegebene Zusammensetzung. Man ersieht aus der Fig. 1, daß die Zusammensetzung des aus hydrothermalem Titanoxid gewonnenen Katalysatormaterials "HT" mit derjenigen des aus anderem Titanoxid gewonnenen Katalysatormaterials "W10" übereinstimmt. Trotzdem zeigt die Fig. 2, daß der Temperaturbereich der erhöhten katalytische Aktivität des "HT" im Vergleich zu der des "W 10" mehr zu niedrigen Temperaturen hin verschoben ist. Die katalytische Aktivität des " W10" selbst ist im Vergleich zu anderen vorbekannten titanoxidhaltigen Katalysatoren bereits erkennbar zu niedrigeren Temperaturen hin verschoben.

Es wurde gefunden, daß die Beeinflussung der Phasentransformation, wie sie beispielsweise durch die Rutilisierung gegeben ist, sehr empfindlich auf Zusätze von Fremdionen reagiert. Dies äußert sich unmittelbar in der Standzeit des Katalysators. Des weiteren wurde festgestellt, daß solche Fremdionen die Phasentransformation nicht nur beschleunigen, sondern auch hemmen können. Die unter hydrothermalen Bedingungen gefällten Titansäuren führen zu Produkten mit einstellbaren Gehalten an Fremdionen. Bei der Verwendung von hydrothermalem Titanoxid wird ein Material eingesetzt, dessen Kristallgitter nahezu frei von Defektstellen ist, das heißt, daß damit die Konzentration möglicher Phasentransformationskeime minimiert ist. Erst bei der anschließenden Präperation der Mahlaktivierung in Gegenwart der zugesetzten Oxide, werden an der Phasengrenze die für die katalytische Aktivität erforderlichen Gitterdefekte an der Oberfläche erzeugt. Unter den im Ausführungsbeispiel zugesetzten Metalloxiden ist auch Vanadiumoxid. Dieses übt einen beschleunigten Effekt auf die Phasentransformation aus. Während Titanoxid, das eine kopräzipierte Vorgeschichte hat und anders als das hydrothermale Material bereits herstellungsbedingt Vanadiumoxid im Kristallgitter enthält, ist das hydrothermale Material im Innern der Titandioxidkristallite frei von Vanadiumoxid. Infolge seiner Armut an Gitterfehlstellen ist außerdem die Tendenz der oberflächlich aufgebrachten Oxide ins Kristallgitter hineinzudiffundieren bei ihm verringert.

Außerdem wird hierdurch erreicht, daß die Menge der zuzusetzenden Oxide wesentlich geringer ist, weil diese nur die Oberfläche der Titandioxidkristallite umhüllen und damit die Titandioxidkristallite nicht wie bei der in der eingangs genannten DE-B 2 458 888 beschriebenen Kopräzipitation gleichmäßig durchsetzen.

## Patentansprüche

1. Katalysatormaterial zur Stickoxidminderung in Rauchgasen in Gegenwart von Ammoniak, **dadurch gekennzeichnet,** daß es erhältlich ist in dem handelsüblichem hydrothermalem Titandioxid, Zusätze von Vanadiumoxid sowie eines oder mehrerer Oxide der Elemente Wolfram, Phosphor, Schwefel, Chrom, Zirkon, Magnesium, Kupfer, Cobalt, Eisen, Uran zugesetzt werden und dieses Material einem Prozeß der Mahlaktivierung unterzogen wird.

2. Katalysatormaterial nach Anspruch 1, **dadurch gekennzeichnet,** daß die Summe der in Form von Oxiden zugesetzten Elemente in Mengen bis 30 Atom% bezogen auf Titan vorliegen.

3. Katalysatormaterial nach Anspruch 1, **dadurch gekennzeichnet,** daß das hydrothermale Titandioxid mit den zugesetzten Oxiden in einer Suspension mit deionisiertem Wasser gemahlen wird.

4. Katalysatormaterial nach Anspruch 1, **dadurch gekennzeichnet,** daß das hydrothermale Titandioxid mit den zugesetzten Oxiden in einer Suspension mit organischen ionenbildenden Lösungsmitteln gemahlen wird.

5. Katalysatormaterial nach Anspruch 1, **dadurch gekennzeichnet,** daß das mahlaktivierte Katalysatormaterial gesintert bzw. calciniert und das gesinterte bzw. calcinierte Material erneut vermahlen wird.

## Claims

1. Catalyst for reducing nitric oxide in flue gases in the presence of ammonia, characterised in that it is obtainable when additions of vanadium oxide as well as one or several oxides of the elements tungsten, phosphorus, sulphur, chromium, zircon, magnesium, copper, cobalt, iron, uranium are added to usual commercial hydrothermal titanium dioxide and this material is subjected to a process of activation by grinding.

2. Catalyst according to claim 1, characterised in that the sum of elements added in the form of oxides is present in quantities of up to 30 atomic%, relative to titanium.

3. Catalyst according to claim 1, characterised in that the hydrothermal titanium dioxide with the added oxides is ground in suspension with deionised water.

4. Catalyst according to claim 1, characterised in that the hydrothermal titanium oxide with the added oxides is ground in suspension with organic ion-forming solvents.

5. Catalyst according to claim 1, characterised in that the catalyst activated by grinding is sintered or calcined and the sintered or calcined material is ground anew.

## Revendications

1. Catalyseur pour diminuer le taux d'oxydes d'azote des gaz de fumée en présence d'ammoniac, caractérisé en ce qu'il peut être obtenu en ajoutant à du dioxyde de titane hydrothermique du commerce, des additions d'oxyde de vanadium ainsi qu'un ou plusieurs oxydes des éléments que sont le tungstène, le phosphore, le soufre, le chrome, le zirconium, le magnésium, le cuivre, le cobalt, le fer et l'uranium et en soumettant ce matériau à un processus d'activation par broyage.

2. Catalyseur selon la revendication 1, caractérisé en ce que la somme d'éléments ajoutés sous forme d'oxydes représente jusqu'à 30% en atomes par rapport au titane.

3. Catalyseur selon la revendication 1, caractérisé en ce que le dioxyde de titane hydrothermique est broyé avec les oxydes ajoutés dans une suspension avec de l'eau désionisée.

4. Catalyseur selon la revendication 1, caractérisé en ce que le dioxyde de titane hydrothermique est broyé avec les oxydes ajoutés dans une suspension avec des solvants organiques et formant des ions.

5. Catalyseur selon la revendication 1, caractérisé en ce que le matériau de catalyseur activé par broyage est fritté et calciné et le matériau fritté ou calciné est rebroyé.

| Typ | Ti | W | V |
|------|-----|-----|---|
| W 10 | 85 | 10 | 5 |
| HT | 85 | 10 | 5 |

## FIG 1

## FIG 2